# EUROPEAN PATENT SPECIFICATION

(11) **EP 4 206 284 B1**
(45) Date of publication and mention of the grant of the patent: **16.07.2025**
(21) Application number: 21861913.8
(22) Date of filing: 03.08.2021
(51) Int. Cl.: C08L 69/00, C08L 67/02, C08K 7/14, C08K 5/00, C08K 5/5399, C08K 3/34

(54) **THERMOPLASTIC RESIN COMPOSITION AND MOLDED PRODUCT MANUFACTURED THEREFROM**
THERMOPLASTISCHE HARZZUSAMMENSETZUNG UND DARAUS HERGESTELLTES FORMPRODUKT
COMPOSITION DE RÉSINE THERMOPLASTIQUE ET PRODUIT MOULÉ FABRIQUÉ À PARTIR DE CELLE-CI

(30) Priority: 31.08.2020 KR 20200109848
(43) Date of publication of application: 05.07.2023
(73) Proprietor: Lotte Chemical Corporation, Seoul, 05551 (KR)
(72) Inventor: YANG, Sung Woo, Uiwang-Si Gyeonggi-do 16073 (KR); KANG, Tae Gon, Uiwang-Si Gyeonggi-do 16073 (KR); CHOI, Ki Hong, Uiwang-Si Gyeonggi-do 16073 (KR); HA, Dong In, Uiwang-Si Gyeonggi-do 16073 (KR)
(74) Representative: Germain Maureau
(86) International application number: PCT/KR2021/010137
(87) International publication number: WO 2022/045616

(56) References cited:
- EP-B1- 2 855 575
- WO-A1-2020/067695
- JP-B2- 6 716 551
- KR-A- 20010 109 044
- KR-A- 20150 132 087
- KR-A- 20150 139 046
- KR-A- 20180 048 852
- KR-A- 20200 036 254
- US-A1- 2016 024 301

## Description

### [Technical Field]

The present invention relates to a thermoplastic resin composition and a molded product manufactured therefrom. More particularly, the present invention relates to a thermoplastic resin composition that exhibits good properties in terms of dimensional stability, flame retardancy, impact resistance, color, and a molded product manufactured therefrom.

### [Background Art]

As engineering plastics, polycarbonate resins have good properties in terms of impact resistance, heat resistance, dimensional stability, weather resistance, flame retardancy, electrical properties, transparency, and are usefully applied to housings of electric/electronic products, interior/exterior materials of office equipment. In addition, various fillers are used to improve various properties of the polycarbonate resins.

However, fillers, such as glass fiber, talc, and wollastonite, which are applied to improve dimensional stability of the polycarbonate resins, have different physical properties depending on the kind of fillers and can cause difficulty in realization of colors due to increase in yellowness index and in realization of metal level dimensional stability due to deterioration in properties when added in a certain amount or more.

Therefore, there is a need for development of a thermoplastic resin composition that can realize metal-level dimensional stability and exhibits good properties in terms of flame retardancy, impact resistance, color.

The background technique of the present invention is disclosed in Korean Patent Laid-open Publication No. 10-2011-0059886.

EP 2 855 575 B1 discloses a flame retardant composition comprising:
- 10 to 90 weight percent of a linear polycarbonate;
- a branched polycarbonate;
- 10 to 70 weight percent of a polysiloxane-polycarbonate copolymer where the polysiloxane-polycarbonate copolymer comprises 10 weight percent or less of polysiloxane having a weight average molecular weight of less than 30,000 Daltons; and
- 1 to 20 weight percent of a phosphazene compound; where all weight percents are based on the total weight of the composition, and where the composition does not contain a flame retardant other than the phosphazene compound.

US 2016/024301 A1 discloses a glass-fiber-reinforced polycarbonate resin composition comprising:
- (A) 100 parts by weight of a resin component (component A) consisting of a polycarbonate-polydiorganosiloxane copolymer resin (component A-1) and an aromatic polycarbonate resin (component A-2);
- (B) 10 to 300 parts by weight of glass fibers having a flat cross section (component B) which have an average value of the long diameter of the fiber cross section of 10 to 50 micro m and an average value of the ratio of the long diameter to the short diameter (long diameter/short diameter) of 1.5 to 8;
- (C) 5 to 25 parts by weight of an adhesion improving agent (component C);
- (D) 5 to 45 parts by weight of a phosphorus-based flame retardant (component D); and
- (E) 0.01 to 3 parts by weight of a fluorine-containing dripping inhibitor (component E),
the content of the polydiorganosiloxane derived from the component A-1 in the resin composition being 0.05 to 4.00 wt percent.

WO 2020/067695 A1 discloses a thermoplastic resin composition which comprises:
- about 100 parts by weight of a thermoplastic resin including a polyester resin;
- about 50-150 parts by weight of glass fibers;
- and about 1-10 parts by weight of a polyether-ester copolymer,
wherein the polyether-ester copolymer has a melt volume flow rate (MVR) of about 30-120 cm³/10 min as measured under conditions of 230 degrees centigrade and 2.16 kg based on ISO 1133. The thermoplastic resin composition is excellent in impact resistance, appearance characteristics, metal joining properties.

### [Disclosure]

### [Technical Problem]

It is one object of the present invention to provide a thermoplastic resin composition that exhibits good properties in terms of dimensional stability, flame retardancy, impact resistance, color.

It is another object of the present invention to provide a molded product manufactured from the thermoplastic resin composition.

The above and other objects of the present invention can be achieved by the present invention described below. It is noted that 1 kilogram-force centimeter (kgf·cm) equals 9.8 newton centimeter (N·cm) and 1" (inch) equals 2.54 cm.

### [Technical Solution]

1. One aspect of the present invention relates to a thermoplastic resin composition. The thermoplastic resin composition comprises: about 100 parts by weight of a polycarbonate resin; about 0.7 part by weight to about 12 parts by weight of a polyester resin; about 35 parts by weight to about 85 parts by weight of glass fiber having a rectangular cross-section, a cross-section aspect ratio (long-side length/short-side length in cross-section) of about 1.5 to about 10, a short-side length of about 2 µm to about 10 µm, and a pre-processing length of about 1 mm to about 30 mm; about 5 parts by weight to about 40 parts by weight of talc having an average particle diameter (D50) of about 7 µm to about 30 µm; and about 4 parts by weight to about 28 parts by weight of a phosphazene flame retardant, wherein the glass fiber and the talc are present in a weight ratio of about 1.5:1 to about 6:1.
2. In embodiment 1, the polyester resin may comprise at least one of polyethylene terephthalate, polybutylene terephthalate, polyethylene naphthalate, polytrimethylene terephthalate, and polycyclohexylene terephthalate.
3. In embodiment 1 or 2, the polyester resin may comprise at least one of polyethylene terephthalate and polybutylene terephthalate.
4. In embodiments 1 to 3, the polyester resin and the glass fiber may be present in a weight ratio of about 1:5 to about 1:50.
5. In embodiments 1 to 4, the thermoplastic resin composition may have a coefficient of linear expansion of about 35 µm/m·°C to about 50 µm/m·°C in a resin flow transverse direction, as measured on an injection-molded specimen having a size of 127 mm × 12.7 mm × 3.2 mm while heating the specimen from 0°C to 60°C at 5°C/min in accordance with ASTM D696.
6. In embodiments 1 to 5, the thermoplastic resin composition may have a flame retardancy of V-0, as measured on a 0.8 mm thick specimen by a UL-94 vertical test method.
7. In embodiments 1 to 6, the thermoplastic resin composition may have a notched Izod impact strength of about 7.5 kgf·cm/cm to about 20 kgf·cm/cm, as measured on a 1/8" thick notched Izod specimen in accordance with ASTM D256.
8. In embodiments 1 to 7, the thermoplastic resin composition may have a yellowness index (YI) of about 2 to about 10 in accordance with ASTM D1925.
9. Another aspect of the present invention relates to a molded product. The molded product is manufactured from the thermoplastic resin composition according to any one of embodiments 1 to 8.
10. In embodiment 9, the molded product may have a longitudinal length of about 100 cm to about 300 cm, a transverse length of about 50 cm to about 150 cm, and a thickness of about 0.1 mm to about 10 mm, and may be manufactured through extrusion and injection molding.

### [Advantageous Effects]

The present invention provides a thermoplastic resin composition that has good properties in terms of dimensional stability, flame retardancy, impact resistance, color, and a molded product manufactured therefrom.

### [Best Mode]

Hereinafter, embodiments of the present invention will be described in detail.

A thermoplastic resin composition according to the present invention comprises: (A) a polycarbonate resin; (B) a polyester resin; (C) glass fiber; (D) talc; and (E) a phosphazene flame retardant.

As used herein to represent a specific numerical range, the expression "a to b" means "≥ a and ≤ b".

### (A) Polycarbonate resin

The polycarbonate resin according to one embodiment of the present invention may comprise any polycarbonate resin used in typical thermoplastic resin compositions. For example, the polycarbonate resin may be an aromatic polycarbonate resin prepared by reacting diphenols (aromatic diol compounds) with a precursor, such as phosgene, halogen formate, or carbonate diester.

In some embodiments, the diphenols may comprise, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, and 2,2-bis-(3,5-dichloro-4-hydroxyphenyl)propane, without being limited thereto. For example, the diphenols may be 2,2-bis(4-hydroxyphenyl)propane, 2,2-bis(3,5-dichloro-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the polycarbonate resin may be a branched polycarbonate resin. For example, the polycarbonate resin may be a polycarbonate resin prepared by adding a tri- or higher polyfunctional compound, specifically, a trior higher valent phenol group-containing compound, in an amount of about 0.05 mol% to about 2 mol% based on the total number of moles of the diphenols used in polymerization.

In some embodiments, the polycarbonate resin may be a homopolycarbonate resin, a copolycarbonate resin, or a blend thereof. In addition, the polycarbonate resin may be partly or completely replaced by an aromatic polyester-carbonate resin obtained by polymerization in the presence of an ester precursor, for example, a bifunctional carboxylic acid.

In some embodiments, the polycarbonate resin may have a weight average molecular weight (Mw) of about 10,000 g/mol to about 200,000 g/mol, for example, about 15,000 g/mol to about 80,000 g/mol, as measured by gel permeation chromatography (GPC). Within this range, the thermoplastic resin composition can have good fluidity (processability).

### (B) Polyester resin

According to the present invention, the polyester resin serves to realize metal-level dimensional stability of the thermoplastic resin composition together with the polycarbonate resin, glass fiber, talc without deterioration in other properties, such as impact resistance, flame retardancy, color, and may be selected from any polyester resins used in a typical thermoplastic resin composition. For example, the polyester resin may be obtained by polycondensation of a dicarboxylic acid component and a diol component, in which the dicarboxylic acid component may comprise: aromatic dicarboxylic acids, such as terephthalic acid (TPA), isophthalic acid (IPA), 1,2-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, 2,7-naphthalenedicarboxylic acid; and aromatic dicarboxylates, such as dimethyl terephthalate (DMT), dimethyl isophthalate, dimethyl-1,2-naphthalate, dimethyl-1,5-naphthalate, dimethyl-1,7-naphthalate, dimethyl-1,8-naphthalate, dimethyl-2,3-naphthalate, dimethyl-2,6-naphthalate, dimethyl-2,7-naphthalate, and in which the diol component may comprise ethylene glycol, 1,2-propylene glycol, 1,3-propylene glycol, 2,2-dimethyl-1,3-propanediol, 1,3-butanediol, 1,4-butanediol, 1,5-pentanediol, 1,6-hexanediol, and a cycloalkylene diol.

In some embodiments, the polyester resin may comprise at least one of polyethylene terephthalate (PET), polybutylene terephthalate (PBT), polyethylene naphthalate (PEN), polytrimethylene terephthalate (PTT), and polycyclohexylene terephthalate. For example, the polyester resin may be polyethylene terephthalate, polybutylene terephthalate, or a combination thereof.

In some embodiments, the polyester resin may have an inherent viscosity of about 0.6 dl/g to about 1.5 dl/g, for example, about 0.7 dl/g to about 1.3 dl/g, as measured in an o-chloro phenol solution (concentration: 0.5 g/dl) at 25°C using an Ubbelohde viscometer (capillary viscometer). Within this range, the thermoplastic resin composition can exhibit good processability, dimensional stability.

In some embodiments, the polyester resin may be present in an amount of about 0.7 parts by weight to about 12 parts by weight, for example, about 1 part by weight to about 10 parts by weight, relative to about 100 parts by weight of the polycarbonate resin. If the content of the polyester resin is less than about 0.7 part by weight relative to about 100 parts by weight of the polycarbonate resin, the thermoplastic resin composition can suffer from deterioration in dimensional stability, and if the content of the polyester resin exceeds about 12 parts by weight, the thermoplastic resin composition can suffer from deterioration in flame retardancy, impact resistance.

### (C) Glass fiber

According to the present invention, the glass fiber serves to realize metal-level dimensional stability of the thermoplastic resin composition together with the polycarbonate resin, the polyester resin, talc without deterioration in other properties, such as flame retardancy, impact resistance, color.

In some embodiments, the glass fiber may have a rectangular cross-section. The glass fiber having a rectangular cross-section may have a cross-section aspect ratio (long-side length/short-side length in cross-section) of about 1.5 to about 10, for example, about 2 to about 8, a short-side length of about 2 µm to about 10 µm, for example, about 4 µm to about 8 µm, and a pre-processing length of about 1 mm to about 30 mm, for example, about 2 mm to about 16 mm, as measured by a scanning electronic microscope (Manufacturer: JEOL, Model: JSM-6390A). Within this range, the thermoplastic resin composition can have good properties in terms of dimensional stability, rigidity, processability.

In some embodiments, the glass fiber may be subjected to surface treatment with a typical surface treatment agent.

In some embodiments, the glass fiber may be present in an amount of about 35 parts by weight to about 85 parts by weight, for example, about 40 parts by weight to about 80 parts by weight, relative to about 100 parts by weight of the polycarbonate resin. If the content of the glass fiber is less than about 35 parts by weight relative to about 100 parts by weight of the polycarbonate resin, the thermoplastic resin composition can suffer from deterioration in dimensional stability, and if the content of the glass fiber exceeds about 85 parts by weight, the thermoplastic resin composition can suffer from deterioration in impact resistance, flame retardancy.

In some embodiments, the polyester resin (B) and the glass fiber (C) may be present in a weight ratio (B:C) of about 1:5 to about 1:50, for example, about 1:8 to about 1:40. Within this range, the thermoplastic resin composition can exhibit good properties in terms of dimensional stability, impact resistance.

### (D) Talc

According to the present invention, the talc serves to realize metal-level dimensional stability of the thermoplastic resin composition together with the polycarbonate resin, the polyester resin, glass fiber without deterioration in other properties comprising flame retardancy, impact resistance, color.

In some embodiments, the talc may be plate-shaped fillers and may have an average particle diameter (D50) of about 7 µm to about 30 µm, for example, about 10 µm to about 20 µm, as measured by a laser particle analyzer (Manufacturer: Beckman Coulter, Model: LS 13 320). If the talc has an average particle diameter outside of this range, the thermoplastic resin composition can suffer from deterioration in dimensional stability, rigidity, processability.

In some embodiments, the talc may be present in an amount of about 5 parts by weight to about 40 parts by weight, for example, about 10 parts by weight to about 30 parts by weight, relative to about 100 parts by weight of the polycarbonate resin. If the content of the talc is less than about 5 parts by weight relative to about 100 parts by weight of the polycarbonate resin, the thermoplastic resin composition can suffer from deterioration in dimensional stability, and if the content of the talc exceeds about 40 parts by weight, the thermoplastic resin composition can suffer from deterioration in impact resistance, flame retardancy.

In some embodiments, the glass fiber and the talc may be present in a weight ratio (C:D) of about 1.5:1 to about 6:1, for example, about 2:1 to about 6:1. If the weight ratio of the glass fiber to the talc is less than about 1.5:1, the thermoplastic resin composition can suffer from deterioration in impact resistance, and if the weight ratio of the glass fiber to the talc exceeds about 6:1, the thermoplastic resin composition can suffer from deterioration in dimensional stability.

### (E) Phosphazene flame retardant

The phosphazene flame retardant according to one embodiment of the present invention serves to improve flame retardancy, impact resistance of the thermoplastic resin composition and may comprise a phosphazene compound used for a typical flame retardant thermoplastic resin composition.

In some embodiments, the phosphazene flame retardant may comprise a phosphazene compound represented by Formula 1. 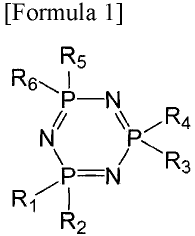 where R₁, R₂, R₃, R₄, R₅ and R₆ are each independently a hydrogen atom, a halogen atom, a substituted or unsubstituted C₁ to C₂₀ alkyl group, a substituted or unsubstituted C₂ to C₇ alkenyl group, a substituted or unsubstituted C₃ to C₂₀ cycloalkyl group, a substituted or unsubstituted C₂ to C₂₀ heterocycloalkyl group, a C₁ to C₂₀ alkoxy group, a C₆ to C₂₀ aryl group or aryloxy group, a C₅ to C₂₀ heteroaryl group, a substituted or unsubstituted C₃ to C₂₀ alkoxy carbonyl alkyl group, a substituted or unsubstituted C₂ to C₁₀ carbonyl alkyl group, an amino group, or a hydroxyl group.

Here, "substituted" means that a hydrogen atom is substituted with a substituent, for example, a C₁ to C₁₀ alkyl group, a halogen atom, a nitro group, a cyano group, a hydroxyl group, an amino group, a C₆ to C₁₀ aryl group, a C₃ to C₁₀ cycloalkyl group, a C₃ to C₁₀ heterocycloalkyl group, a C₄ to C₁₀ heteroaryl group, and combinations thereof.

In addition, "alkyl", "alkoxy" and other substituents containing an "alkyl" moiety comprise linear or branched structures, and "alkenyl" comprises linear or branched structures having 2 to 8 carbon atoms and containing at least one double bond. In addition, "cycloalkyl" comprises saturated monocyclic or saturated bicyclic structures having 3 to 20 carbon atoms. Further, "aryl" is an organic radical derived from an aromatic hydrocarbon through removal of one hydrogen atom therefrom and comprises single or fused ring systems containing suitably 4 to 7, preferably 5 or 6 atoms in each ring. Specifically, "aryl" may comprise phenyl, naphthyl, biphenyl, tolyl,.

Here, "heterocycloalkyl" means a cycloalkyl group containing 1 to 3 heteroatoms selected from N, O, and S as saturated cyclic hydrocarbon backbone atoms, in which the remaining saturated monocyclic or bicyclic ring backbone atoms are carbon atoms, and may comprise pyrrolidinyl, azetidinyl, pyrazolidinyl, oxazolidinyl, piperidinyl, piperazinyl, morpholinyl, thiomorpholinyl, thiazolidinyl, hydantoinyl, valerolactamyl, oxylanyl, oxetanyl, dioxolanyl, dioxanyl, oxathiolanyl, oxathianyl, dithianyl, dihydrofuranyl, tetrahydrofuranyl, dihydropyranyl, tetrahydropyranyl, tetrahydropyridinyl, tetrahydropyrimidinyl, tetrahydrothiophenyl, tetrahydrothiopyranyl, diazepanyl, azepanyl.

In addition, "heteroaryl" means an aryl group containing 1 to 3 heteroatoms selected from N, O, and S as aromatic ring backbone atoms, in which the remaining ring backbone atoms are carbon atoms. The heteroaryl group may comprise a divalent aryl group in which a heteroatom in the ring is oxidized or quaternized to form, for example, an N-oxide or a quaternary salt. Specifically, the heteroaryl group may comprise furyl, thiophenyl, pyrrolyl, pyranyl, imidazolyl, pyrazolyl, thiazolyl, thiadiazolyl, isothiazolyl, isoxazolyl, oxazolyl, oxadiazolyl, triazinyl, tetrazinyl, triazolyl, tetrazolyl, furazanyl, pyridyl, pyrazinyl, pyrimidinyl, pyridazinyl.

In some embodiments, the phosphazene flame retardant may be present in an amount of about 4 parts by weight to about 28 parts by weight, for example, about 5 parts by weight to about 25 parts by weight, relative to about 100 parts by weight of the polycarbonate resin. If the content of the phosphazene flame retardant is less than about 4 parts by weight relative to about 100 parts by weight of the polycarbonate resin, the thermoplastic resin composition can suffer from deterioration in flame retardancy, fluidity, and if the content of the phosphazene flame retardant exceeds about 28 parts by weight, the thermoplastic resin composition can suffer from deterioration in impact resistance, dimensional stability.

In some embodiments, the thermoplastic resin composition may further comprise additives used for typical thermoplastic resin compositions. Examples of the additives may comprise antioxidants, anti-dripping agents, lubricants, release agents, nucleating agents, antistatic agents, stabilizers, pigments, dyes, and mixtures thereof, without being limited thereto. The additives may be present in an amount of about 0.001 parts by weight to about 40 parts by weight, for example, about 0.1 parts by weight to about 10 parts by weight, relative to about 100 parts by weight of the polycarbonate resin.

In some embodiments, the thermoplastic resin composition may be prepared in pellet form by mixing the aforementioned components, followed by melt extrusion at about 200°C to about 280°C, for example, at about 220°C to about 270°C, using a typical twin-screw extruder.

In some embodiments, the thermoplastic resin composition may have a coefficient of linear expansion of about 35 µm/m·°C to about 50 µm/m·°C, for example, about 40 µm/m·°C to about 49 µm/m·°C, in a resin flow transverse direction, as measured on an injection-molded specimen having a size of 127 mm × 12.7 mm × 3.2 mm while heating the specimen from 0°C to 60°C at 5°C /min using a thermo-mechanical analyzer in accordance with ASTM D696.

In some embodiments, the thermoplastic resin composition may have a flame retardancy of V-0, as measured on a 0.8 mm thick injection-molded specimen by a UL-94 vertical test method.

In some embodiments, the thermoplastic resin composition may have a notched Izod impact strength of about 7.5 kgf·cm/cm to about 20 kgf·cm/cm, for example, about 8 kgf·cm/cm to about 15 kgf·cm/cm, as measured on a 1/8" thick specimen in accordance with ASTM D256.

In some embodiments, the thermoplastic resin composition may have a yellowness index (YI) of about 2 to about 10, for example, about 3 to about 8, as measured in accordance with ASTM D1925.

A molded product according to the present invention is manufactured from the thermoplastic resin composition as set forth above. The thermoplastic resin composition may be prepared in pellet form. The prepared pellets may be produced into various molded products (articles) by various molding methods, such as injection molding, extrusion molding, vacuum molding, and casting. These molding methods are well known to those skilled in the art. The molded product has good properties in terms of dimensional stability, flame retardancy, impact resistance, color, and balance therebetween, and thus can be advantageously used for interior/exterior materials for electrical/electronic articles, thin sheets.

In some embodiments, the molded product may have a coefficient of linear expansion of about 35 µm/m·°C to about 50 µm/m·°C in the resin flow transverse direction, as measured on an injection-molded specimen having a size of 127 mm × 12.7 mm × 3.2 mm while heating the specimen from 0°C to 60°C at 5°C /min in accordance with ASTM D696, a flame retardancy of V-0, as measured on a 0.8 mm thick injection-molded specimen by a UL-94 vertical test method, a notched Izod impact strength of about 7.5 kgf·cm/cm to about 20 kgf·cm/cm, as measured on a 1/8" thick specimen in accordance with ASTM D256 and a yellowness index (YI) of about 2 to about 10, as measured in accordance with ASTM D1925, and may be advantageously used for large extrusion and injection-molded products (interior/exterior materials for electrical/electronic products) having a longitudinal length of about 100 cm to about 300 cm, a transverse length of about 50 cm to about 150 cm, and a thickness of about 0.1 mm to about 10 mm.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.

### (A) Polycarbonate resin

A bisphenol-A polycarbonate resin having a weight average molecular weight (Mw) of 25,000 g/mol was used.

### (B) Polyester resin

Polyethylene terephthalate (PET, Manufacturer: Lotte Chemical Co., Ltd., Inherent viscosity: 0.765 dl/g) was used.

### (C) Glass fiber

(C1) Glass fiber having a rectangular cross-section, a cross-section aspect ratio (long-side length/short-side length in cross-section) of 4, a short-side length of 7 µm, and a pre-processing length of 3 mm (Manufacturer: Nittobo Co., Ltd., Product Name: CSG 3PA-832) were used.

(C2) Glass fiber having a circular cross-section, a cross-section diameter of 13 µm, and a pre-processing length of 3 mm (Manufacturer: KCC, Product Name: CS321-EC10-3) were used.

### (D) Inorganic fillers

(D1) Talc having an average particle diameter (D50) of 12 µm (Manufacturer: KOCH, Product Name: KCP-04) was used.

(D2) Talc having an average particle diameter (D50) of 6 µm (Manufacturer: KOCH, Product Name: KCM-6300) was used.

(D3) Mica having an average particle diameter (D50) of 400 µm (Manufacturer: IMERYS Co., Ltd., Product Name: 60-S) was used.

### (E) Phosphorus flame retardant

(E1) A phosphazene compound (Manufacturer: Fushimi Pharmaceutical Co., Ltd., Product Name: Rabitle FP-110) was used.

(E2) Bisphenol-A diphosphate (Manufacturer: Yoke Chemical Co., Ltd., Product Name: YOKE BDP) was used.

### Examples 1 to 9 and Comparative Examples 1 to 14

The above components were mixed in amounts as listed in Tables 1 to 3 and subjected to extrusion under conditions of 260°C, thereby preparing a thermoplastic resin composition in pellet form. Extrusion was performed using a twin-screw extruder (L/D=36, Φ: 45 mm) and the prepared pellets were dried at 80°C for 4 hours or more and injection-molded in a 6 oz (* 0.02835 kg). injection molding machine (molding temperature: 260°C, mold temperature: 60°C), thereby preparing specimens. The prepared specimens were evaluated as to the following properties by the following method, and results are shown in Tables 1 to 3.

### Property Measurement

(1) Dimensional stability: Coefficient of linear expansion (unit: µm/m·°C) was measured in a resin flow transverse direction on an injection-molded specimen having a size of 127 mm × 12.7 mm × 3.2 mm while heating the specimen from 0°C to 60°C at 5°C /min using a thermo-mechanical analyzer in accordance with ASTM D696.
(2) Flame retardancy: Flame retardancy was measured on a 0.8 mm thick injection-molded specimen by a UL-94 vertical test method.
(3) Impact resistance: Notched Izod impact strength (kgf·cm/cm) was measured on a 1/8" thick specimen in accordance with ASTM D256.
(4) Color: Yellowness index (YI) was measured in accordance with ASTM D1925.

**Table 1**

| | Example | | | | | | | | |
|---|---|---|---|---|---|---|---|---|---|
| | 1 | 2 | 3 | 4 | 5 | 6 | 7 | 8 | 9 |
| (A) (parts by weight) | 100 | 100 | 100 | 100 | 100 | 100 | 100 | 100 | 100 |
| (B) (parts by weight) | 1.5 | 5 | 10 | 5 | 5 | 5 | 5 | 5 | 5 |
| (C1) (parts by weight) | 60 | 60 | 60 | 40 | 80 | 60 | 60 | 60 | 60 |
| (C2) (parts by weight) | - | - | - | - | - | - | - | - | - |
| (D1) (parts by weight) | 20 | 20 | 20 | 20 | 20 | 10 | 30 | 20 | 20 |
| (D2) (parts by weight) | - | - | - | - | - | - | - | - | - |
| (D3) (parts by weight) | - | - | - | - | - | - | - | - | - |
| (E1) (parts by weight) | 15 | 15 | 15 | 15 | 15 | 15 | 15 | 5 | 25 |
| (E2) (parts by weight) | - | - | - | - | - | - | - | - | - |
| Coefficient of linear expansion | 49 | 45 | 44 | 49 | 42 | 48 | 40 | 44 | 49 |
| Flame retardancy | V-0 | V-0 | V-0 | V-0 | V-0 | V-0 | V-0 | V-0 | V-0 |
| Notched Izod impact strength | 10.3 | 9.8 | 8.6 | 12.1 | 10.4 | 13.7 | 8.1 | 11.4 | 8.3 |
| Yellowness index (YI) | 3 | 3.5 | 3.9 | 3.4 | 3.7 | 3.3 | 3.4 | 3.5 | 3.7 |

**Table 2**

| | Comparative Example | | | | | | |
|---|---|---|---|---|---|---|---|
| | 1 | 2 | 3 | 4 | 5 | 6 | 7 |
| (A) (parts by weight) | 100 | 100 | 100 | 100 | 100 | 100 | 100 |
| (B) (parts by weight) | 0.5 | 15 | 5 | 5 | 5 | 5 | 5 |
| (C1) (parts by weight) | 60 | 60 | 30 | 90 | - | 60 | 60 |
| (C2) (parts by weight) | - | - | - | - | 60 | - | - |
| (D1) (parts by weight) | 20 | 20 | 20 | 20 | 20 | 3 | 43 |
| (D2) (parts by weight) | - | - | - | - | - | - | - |
| (D3) (parts by weight) | - | - | - | - | - | - | - |
| (E1) (parts by weight) | 15 | 15 | 15 | 15 | 15 | 15 | 15 |
| (E2) (parts by weight) | - | - | - | - | - | - | - |
| Coefficient of linear expansion | 52 | 44 | 60 | 40 | 52 | 53 | 42 |
| Flame retardancy | V-0 | V-2 | V-0 | V-0 | V-0 | V-1 | V-0 |
| Notched Izod impact strength | 11 | 7 | 14 | 4.9 | 10.1 | 12.4 | 3.9 |
| Yellowness index (YI) | 2.8 | 4.6 | 3.3 | 3.8 | 3.8 | 3.6 | 3.9 |

**Table 3**

| | Comparative Example | | | | | | |
|---|---|---|---|---|---|---|---|
| | 8 | 9 | 10 | 11 | 12 | 13 | 14 |
| (A) (parts by weight) | 100 | 100 | 100 | 100 | 100 | 100 | 100 |
| (B) (parts by weight) | 5 | 5 | 5 | 5 | 5 | 5 | 5 |
| (C1) (parts by weight) | 60 | 60 | 60 | 60 | 60 | 40 | 70 |
| (C2) (parts by weight) | - | - | - | - | - | - | - |
| (D1) (parts by weight) | - | - | 20 | 20 | 20 | 40 | 10 |
| (D2) (parts by weight) | 20 | - | - | - | - | - | - |
| (D3) (parts by weight) | - | 20 | - | - | - | - | - |
| (E1) (parts by weight) | 15 | 15 | 3 | 30 | - | 15 | 15 |
| (E2) (parts by weight) | - | - | - | - | 15 | - | - |
| Coefficient of linear expansion | 54 | 44 | 41 | 56 | 48 | 45 | 53 |
| Flame retardancy | V-0 | V-0 | V-2 | V-0 | V-1 | V-0 | V-0 |
| Notched Izod impact strength | 8.8 | 11.1 | 11.8 | 6.8 | 8 | 4 | 12 |
| Yellowness index (YI) | 3.9 | 47.1 | 3.3 | 3.9 | 3.8 | 3.9 | 2.5 |

From the result, it could be seen that the thermoplastic resin compositions according to the present invention had good properties in terms of dimensional stability, flame retardancy, impact resistance, color.

Conversely, it could be seen that the thermoplastic resin composition prepared using an insufficient amount of the polyester resin (Comparative Example 1) suffered from deterioration in dimensional stability; the thermoplastic resin composition prepared using an excess of the polyester resin (Comparative Example 2) suffered from deterioration in flame retardancy, impact resistance; the thermoplastic resin composition prepared using an insufficient amount of the glass fiber (Comparative Example 3) suffered from deterioration in dimensional stability; and the thermoplastic resin composition prepared using an excess of the glass fiber (Comparative Example 4) suffered from deterioration in impact resistance ; and the thermoplastic resin composition prepared using glass fiber (C2) instead of the glass fiber of the present invention (Comparative Example 5) suffered from deterioration in flame retardancy, bending properties. In addition, it could be seen that the thermoplastic resin composition prepared using an insufficient amount of talc (Comparative Example 6) suffered from deterioration in dimensional stability, flame retardancy; the thermoplastic resin composition prepared using an excess of talc (Comparative Example 7) suffered from deterioration in impact resistance; the thermoplastic resin composition prepared using talc (D2) (Comparative Example 8) instead of the talc of the present invention suffered from deterioration in dimensional stability and the like; and the thermoplastic resin composition prepared using mica (D3) (Comparative Example 9) suffered from difficulty in color implementation. In addition, it could be seen that the thermoplastic resin composition prepared using an insufficient amount of the phosphazene flame retardant (Comparative Example 10) suffered from deterioration in flame retardancy; the thermoplastic resin composition prepared using an excess of the phosphazene flame retardant (Comparative Example 11) suffered from deterioration in impact resistance, dimensional stability; and the thermoplastic resin composition prepared using BSP (E2) (Comparative Example 12) instead of the phosphazene flame retardant according to the present invention suffered from deterioration in flame retardancy. Further, it could be seen that the thermoplastic resin composition prepared using the glass fiber and the talc in an insufficient weight ratio (1:1) (Comparative Example 13) suffered from deterioration in impact resistance; and the thermoplastic resin composition prepared using the glass fiber and the talc in an excessive weight ratio (7:1) (Comparative Example 14) suffered from deterioration in dimensional stability.

## Claims

1. A thermoplastic resin composition comprising:
about 100 parts by weight of a polycarbonate resin;
about 0.7 part by weight to about 12 parts by weight of a polyester resin;
about 35 parts by weight to about 85 parts by weight of glass fiber having a rectangular cross-section, a cross-section aspect ratio (long-side length/short-side length in cross-section) of about 1.5 to about 10, a short-side length of about 2 µm to about 10 µm, and a pre-processing length of about 1 mm to about 30 mm as measured by the method outlined in the description;
about 5 parts by weight to about 40 parts by weight of talc having an average particle diameter (D50) of about 7 µm to about 30 µm as measured by the method outlined in the description;
and
about 4 parts by weight to about 28 parts by weight of a phosphazene flame retardant,
wherein the glass fiber and the talc are present in a weight ratio of about 1.5:1 to about 6:1.

2. The thermoplastic resin composition according to claim 1, wherein the polyester resin comprises at least one of polyethylene terephthalate, polybutylene terephthalate, polyethylene naphthalate, polytrimethylene terephthalate, and polycyclohexylene terephthalate.

3. The thermoplastic resin composition according to claim 1 or 2, wherein the polyester resin comprises at least one of polyethylene terephthalate and polybutylene terephthalate.

4. The thermoplastic resin composition according to any one of claims 1 to 3, wherein the polyester resin and the glass fiber are present in a weight ratio of about 1:5 to about 1:50.

5. The thermoplastic resin composition according to any one of claims 1 to 4, wherein the thermoplastic resin composition has a coefficient of linear expansion of about 35 µm/m·°C to about 50 µm/m·°C in a resin flow transverse direction, as measured on an injection-molded specimen having a size of 127 mm × 12.7 mm × 3.2 mm while heating the specimen from 0°C to 60°C at 5°C/min in accordance with ASTM D696.

6. The thermoplastic resin composition according to any one of claims 1 to 5, wherein the thermoplastic resin composition has a flame retardancy of V-0, as measured on a 0.8 mm thick specimen by a UL-94 vertical test method.

7. The thermoplastic resin composition according to any one of claims 1 to 6, wherein the thermoplastic resin composition has a notched Izod impact strength of about 73.5 N.cm/cm to about 196 N.cm/cm (7.5 kgf.cm/cm to about 20 kgf.cm/cm) as measured on a 0.3175 cm (1/8") thick notched Izod specimen in accordance with ASTM D256.

8. The thermoplastic resin composition according to any one of claims 1 to 7, wherein the thermoplastic resin composition has a yellowness index (YI) of about 2 to about 10 in accordance with ASTM D1925.

9. A molded product manufactured from the thermoplastic resin composition according to any one of claims 1 to 8.

10. The molded product according to claim 9, wherein the molded product has a longitudinal length of about 100 cm to about 300 cm, a transverse length of about 50 cm to about 150 cm, and a thickness of about 0.1 mm to about 10 mm.

## Patentansprüche

1. Thermoplastische Harzzusammensetzung, umfassend:
etwa 100 Gewichtsteile eines Polycarbonatharzes;
etwa 0,7 Gewichtsteile bis etwa 12 Gewichtsteile eines Polyesterharzes;
etwa 35 Gewichtsteile bis etwa 85 Gewichtsteile Glasfasern mit einem rechteckigen Querschnitt, einem Querschnittsverhältnis (Langseitenlänge/Kurzseitenlänge im Querschnitt) von etwa 1,5 bis etwa 10, einer Kurzseitenlänge von etwa 2 µm bis etwa 10 µm und einer Vorverarbeitungslänge von etwa 1 mm bis etwa 30 mm, gemessen nach dem in der Beschreibung beschriebenen Verfahren;
etwa 5 Gewichtsteile bis etwa 40 Gewichtsteile Talk mit einem durchschnittlichen Partikeldurchmesser (D50) von etwa 7 µm bis etwa 30 µm, gemessen nach dem in der Beschreibung beschriebenen Verfahren; und
etwa 4 Gewichtsteile bis etwa 28 Gewichtsteile eines Phosphazen-Flammschutzmittels,
wobei die Glasfaser und der Talk in einem Gewichtsverhältnis von etwa 1,5:1 zu etwa 6:1 vorhanden sind.

2. Thermoplastische Harzzusammensetzung nach Anspruch 1, wobei das Polyesterharz mindestens eines aus Polyethylenterephthalat, Polybutylenterephthalat, Polyethylennaphthalat, Polytrimethylenterephthalat und Polycyclohexylenterephthalat umfasst.

3. Thermoplastische Harzzusammensetzung nach Anspruch 1 oder 2, wobei das Polyesterharz mindestens eines aus Polyethylenterephthalat und Polybutylenterephthalat umfasst.

4. Thermoplastische Harzzusammensetzung nach einem der Ansprüche 1 bis 3, wobei das Polyesterharz und die Glasfaser in einem Gewichtsverhältnis von etwa 1:5 bis etwa 1:50 vorhanden sind.

5. Thermoplastische Harzzusammensetzung nach einem der Ansprüche 1 bis 4, wobei die thermoplastische Harzzusammensetzung einen linearen Ausdehnungskoeffizienten von etwa 35 µm/m·°C bis etwa 50 µm/m·°C in einer Harzflussquerrichtung aufweist, gemessen an einer spritzgegossenen Probe mit einer Größe von 127 mm × 12,7 mm × 3,2 mm, während die Probe von 0 °C auf 60 °C bei 5 °C/min gemäß ASTM D696 erhitzt wird.

6. Thermoplastische Harzzusammensetzung nach einem der Ansprüche 1 bis 5, wobei die thermoplastische Harzzusammensetzung eine Flammwidrigkeit von V-0 aufweist, gemessen an einer 0,8 mm dicken Probe durch ein vertikales UL-94-Prüfverfahren.

7. Thermoplastische Harzzusammensetzung nach einem der Ansprüche 1 bis 6, wobei die thermoplastische Harzzusammensetzung eine Kerbschlagzähigkeit nach Izod von etwa 73,5 N.cm/cm bis etwa 196 N.cm/cm (7,5 kgf.cm/cm bis etwa 20 kgf.cm/cm) aufweist, gemessen an einer 0,3175 cm (1/8") dicken, gekerbten Izod-Probe gemäß ASTM D256.

8. Thermoplastische Harzzusammensetzung nach einem der Ansprüche 1 bis 7, wobei die thermoplastische Harzzusammensetzung einen Gelbigkeitsindex (YI) von etwa 2 bis etwa 10 gemäß ASTM D1925 aufweist.

9. Formprodukt, das aus der thermoplastischen Harzzusammensetzung nach einem der Ansprüche 1 bis 8 hergestellt ist.

10. Formprodukt nach Anspruch 9, wobei das Formprodukt eine longitudinale Länge von etwa 100 cm bis etwa 300 cm, eine transversale Länge von etwa 50 cm bis etwa 150 cm und eine Dicke von etwa 0,1 mm bis etwa 10 mm aufweist.

## Revendications

1. Composition de résine thermoplastique comprenant :
environ 100 parties en poids d'une résine polycarbonate ;
environ 0,7 partie en poids à environ 12 parties en poids d'une résine polyester ;
environ 35 parties en poids à environ 85 parties en poids de fibre de verre ayant une section transversale rectangulaire, un rapport d'aspect de section transversale (longueur du côté long/longueur du côté court dans la section transversale) d'environ 1,5 à environ 10, une longueur du côté court d'environ 2 µm à environ 10 µm, et une longueur de prétraitement d'environ 1 mm à environ 30 mm tels que mesurés par la méthode décrite dans la description ;
environ 5 parties en poids à environ 40 parties en poids de talc ayant un diamètre moyen de particule (D50) d'environ 7 µm à environ 30 µm tel que mesuré par la méthode décrite dans la description ; et
environ 4 parties en poids à environ 28 parties en poids d'un ignifugeant au phosphazène,
dans laquelle la fibre de verre et le talc sont présents dans un rapport en poids d'environ 1,5:1 à environ 6:1.

2. Composition de résine thermoplastique selon la revendication 1, dans laquelle la résine polyester comprend au moins l'un parmi le polyéthylène téréphtalate, le polybutylène téréphtalate, le polyéthylène naphtalate, le polytriméthylène téréphtalate, et le polycyclohexylène téréphtalate.

3. Composition de résine thermoplastique selon la revendication 1 ou 2, dans laquelle la résine polyester comprend au moins l'un parmi le polyéthylène téréphtalate et le polybutylène téréphtalate.

4. Composition de résine thermoplastique selon l'une quelconque des revendications 1 à 3, dans laquelle la résine polyester et la fibre de verre sont présentes dans un rapport en poids d'environ 1:5 à environ 1:50.

5. Composition de résine thermoplastique selon l'une quelconque des revendications 1 à 4, dans laquelle la composition de résine thermoplastique a un coefficient de dilatation linéaire d'environ 35 µm/m·°C à environ 50 µm/m·°C dans la direction transversale d'écoulement de résine, tel que mesuré sur un spécimen moulé par injection ayant une taille de 127 mm x 12,7 mm x 3,2 mm tout en chauffant le spécimen de 0°C à 60°C à 5°C/min conformément à la norme ASTM D696.

6. Composition de résine thermoplastique selon l'une quelconque des revendications 1 à 5, dans laquelle la composition de résine thermoplastique a une ininflammabilité de V-0, telle que mesurée sur un spécimen de 0,8 mm d'épaisseur par une méthode d'essai verticale UL-94.

7. Composition de résine thermoplastique selon l'une quelconque des revendications 1 à 6, dans laquelle la composition de résine thermoplastique a une résistance aux chocs Izod sur barreau entaillé d'environ 73,5 N.cm/cm à environ 196 N.cm/cm (7,5 kgf.cm/cm à environ 20 kgf.cm/cm) telle que mesurée sur un spécimen Izod entaillé de 0,3175 cm (1/8") d'épaisseur, conformément à la norme ASTM D256.

8. Composition de résine thermoplastique selon l'une quelconque des revendications 1 à 7, dans laquelle la résine thermoplastique a un indice de jaunissement (YI) d'environ 2 à environ 10, conformément à la norme ASTM D1925.

9. Produit moulé fabriqué à partir de la composition de résine thermoplastique selon l'une quelconque des revendications 1 à 8.

10. Produit moulé selon la revendication 9, dans lequel le produit moulé a une longueur longitudinale d'environ 100 cm à environ 300 cm, une longueur transversale d'environ 50 cm à environ 150 cm et une épaisseur d'environ 0,1 mm à environ 10 mm.
